# EUROPEAN PATENT APPLICATION

(11) **EP 4 131 520 A1**
(43) Date of publication of application: **08.02.2023**
(21) Application number: 21779555.8
(22) Date of filing: 26.02.2021
(51) Int. Cl.: H01M 8/0234

(54) **NEW GAS DIFFUSION LAYERS FOR FUEL CELLS AND METHOD FOR OBTAINING THEM**

(30) Priority: 31.03.2020 ES 202030261
(71) Applicant: Universidad Politecnica de Cartagena, 30202 Cartagena (Murcia) (ES)
(72) Inventor: LÓPEZ CASCALES, José, Javier, 30202 CARTAGENA (Murcia) (ES); JERÉZ NAVARRO, Andrés, 30202 CARTAGENA (Murcia) (ES)
(74) Representative: Herrero & Asociados, S.L.
(86) International application number: PCT/ES2021/070143
(87) International publication number: WO 2021/198542

(57) **Abstract**

The present invention relates to a GDL for PEM- fuel cells formed by a macroporous substrate layer (MPS) and a microporous carbon layer (MPL), the MPS being formed by carbon fibers and plant fibers, wherein the plant fibers mainly comprise esparto fibers. Likewise, the procedure for manufacturing the GDLs is provided, which comprises: a) Generation of a paper-carbon pulp, using esparto plant fibers, b) Filtering; c) Homogenization; d) Cold pressing and compaction of the paper-carbon film; e) Curing the paper-carbon film at room temperature for a minimum period of 12 hours, f) Generation of the MPS by thermal treatment of the cured paper-carbon film at temperatures not exceeding 1,050°C; g) Obtaining the MPL layer; h) Application of a 2% perfluoroexane aqueous solution to the GDL obtained and subsequent curing process at 100-150 °C for 10-20 minutes.

## Description

### Field of the invention

The present invention relates to the fuel cell sector. In particular, it relates to new gas diffusion layers for proton exchange membrane fuel cells, which use esparto fibers in the composition of the macroporous substrate layer. Likewise, the method for their obtention is also contemplated.

### Background of the invention

Gas diffusion layers (GDLs) are one of the fundamental elements that make up the heart of proton exchange membrane (PEM) fuel cells, together with the catalyst and the proton membrane.

Among the main functions carried out by the GDLs in a fuel cell, the following can be highlighted:
1.- They provide the means for the electrical transport to the current collectors of the cell.
2.- They optimize the distribution of hydrogen and oxygen on the surface of the catalyst.
3.- They manage the water generated inside the cell associated with the electrochemical reaction that takes place.

Fuel cell technology has reached a state of maturity that is allowing its implementation in a wide variety of industrial sectors. Thus, Ballard Power Systems (www.ballard.com), Fuel Cell Earth (www.fuelcellearth.com) and General Electric (www.ge.com) have developed different types of fuel cells for different applications, which range from low power cells in mobile devices, to cogeneration plants of the order of megawatts.

Regarding specific applications, fuel cells are attracting great interest in fields as diverse as the naval (S-80 submarine project developed at Navantia facilities in Cartagena) or the automotive industry, wherein well-known companies such as Hyundai, Toyota and Honda are committed very decisively to electric vehicles powered by fuel cells. In this sense, Hyundai's commitment stands out, where the company is planning the production of 500,000 electric vehicles powered by fuel cells of its Nexo model until 2030.

Document US2010129696A1 (HYUNDAI MOTOR) describes a gas diffusion layer for a fuel cell with a dual structure, formed by a macroporous substrate (MPS) and a microporous layer (MPL), with a thickness of 0.2-0.3 mm and a porosity of 50-90%.

In relation to the GDLs used in PEM fuel cells, no national company is dedicated to their production, the international market being dominated by the SGLCARBON companies (www.sglcarbon.com) that sell their GDLs under the SIGRACET trademark, and Toray Industries (www.toray.com) which markets its GDLs under the TORAY trademark.

Thus, document EP2958174A1 (TORAY INDUSTRIES) discloses a gas diffusion layer formed by a porous substrate with carbon fibers 0.06-0.3 mm thick and a porous layer with carbonaceous particles with a hydrophobic polymer 10-55µm thick. Likewise, the document discloses a process for manufacturing said gas diffusion layer using high temperatures. Firstly, it prepares a sheet using the paper pulp method from a pulp mixture (e.g. wood pulp) and carbon fibers; impregnates the sheet with an aqueous dispersion of epoxy resin and an additive (e.g. graphite); tempers by heating with air or hot pressing and carries out a step of carbonization of the sheet at high temperatures (1300-3000°C); subsequently carrying out a hydrophobic treatment with a fluorinated resin. At this point a porous substrate of carbon fibers is obtained. The following steps are then developed: preparation of an aqueous dispersion of carbon particles and a hydrophobic polymer; infiltration of the dispersion in the previously obtained substrate; draining; drying at 80-200°C; formation of a porous film by coating the substrate surface (e.g. spray technique) with a dispersion of carbonaceous particles and a hydrophobic polymer; drying at a temperature of 80-200°C; ending with a heat treatment at 300-380°C.

The paper by Yarar Kaplan, B. et al "Flexible carbon-cellulose fiber-based composite gas diffusion layer for polymer electrolyte membrane fuel cells". J Mater Sci 52, 4968-4976 (2017). https://doi.org/10.1007/s10853-016-0734-6, discloses a process for manufacturing an MPS through the following steps: generation of a pulp of recycled paper fibers, filtering, drying at 90°C under vacuum, and subsequent hot pressing at 10MPa, 150°C, for 30 minutes. In this process, due to their nature, the GDLs generated are not subjected to any subsequent carbonization/graphitization process at temperatures equal to or greater than 1000 °C that may improve their electrical conductivity.

Document CN110085878A (WUHAN VISION HYDRAV FUEL CELL TECH) describes a method for preparing a gas diffusion layer for PEM fuel cells using bamboo as raw material, in which a pressing step of the plant fiber layer is carried out at 1500-2500°C and 1-5 MPa for 0.5-3h to form a sheet of bamboo fibers.

The authors of the present invention, after an important research work, have developed a new method for manufacturing GDLs that provides important advantages and technical effects to fuel cells in their different applications.

Among the characteristics that these GDLs must comply with, the following stand out: a high electrical conductivity, a high permeability to gases, a high hydrophobicity and a great stability against hours of operation in a fuel cell. In this sense, the GDLs of the present invention are characterized by having incorporated a high content of fibers of natural origin to their composition, specifically esparto fibers, which give it physical-chemical and durability features that turn out to be optimal for its use in fuel cells.

The optimization of the different manufacturing processes of said GDLs, compared to those described in the state of the art, with a reduction in the temperature used in the different manufacturing steps and the elimination of the use of organic solvents, together with the improvement of the features of the GDLs, thanks to the use of plant fibers in their composition, make the GDLs of the invention a much more advantageous product in terms of manufacturing costs and a much more environmentally friendly product throughout its entire manufacturing process.

### Brief description of the figures

**Figure 1****.** Diagram of the structure of a GDL including the macroporous substrate layer (MPS) and the microporous layer (MPL).
**Figure 2****.** Diagram of the manufacturing process of the GDLs of the present invention.
**Figure 3****.** TEM image of the cotton (A) and esparto (B) fibers used in the manufacture of the MPS.
**Figure 4****.** Front view (A) and side view (B) of the synthesized GDLs. In (B) the hydrophobic properties of said GDLs are observed.

### Detailed description of the invention

The authors of the present invention have developed a method for manufacturing new GDLs that allows the incorporation of fibers of plant origin (mainly esparto) to the composition of the GDLs from the use of a mixture of additives that allow controlling the morphology of the new manufactured GDLs, so that unique features are achieved, both in terms of their morphology and their electrical and mechanical features.

A main aspect of the invention refers to a gas diffusion layer (GDLs) for proton exchange membrane (PEM) fuel cells formed by a macroporous substrate layer (MPS) and a microporous carbon layer (MPL), characterized in that the macroporous substrate layer (MPS) is formed by a combination of carbon fibers and plant fibers, where the plant fibers comprise mostly esparto fibers.

In the present invention, "mostly" refers to the plant fibers comprising a percentage of esparto fibers greater than 50% of the total plant fibers. In addition to esparto, the plant fibers of the MPS may comprise cotton fibers.

The use of esparto in the composition of the MPS involves the use of plant fibers that are obtained from a crop with low water demand, compared to other plant fibers (such as cotton or bamboo). This is a fundamental aspect when seeking to manufacture products under strict sustainability parameters, given the scarcity of existing water resources worldwide. In this way, the use of esparto in its manufacture will avoid the use of water resources for the development of a technological product such as MPS, to the detriment of the use of said resources for food.

In a particular embodiment of the invention, the MPS and the MPL have a thickness comprised between 0.15 and 1 mm and 35 and 60 microns, respectively.

In a preferred embodiment, the plant fibers of the MPS are present in 10-60% of the total mass of the MPS.

Another main aspect of the present invention refers to a method for manufacturing the gas diffusion layer (GDLs) for proton exchange membrane (PEM) fuel cells. Said procedure comprises the following manufacturing steps:
a) Generation of a paper-carbon pulp by homogeneously mixing the following components in aqueous solution:
   - 0.05-0.25 mg of methyl cellulose,
   - 5-20 ml of white glue in water,
   - 1.5-2.5 g of carbon fiber 0.5-3 mm long,
   - 0.5-4 g of plant fiber, which mainly includes esparto fibers,
   - 6-10 ml of water-soluble epoxy, and
   - 0.5-1.5 g of graphite with a grain size between 10 and 30 microns,
b) Filtration of the paper-carbon pulp generated in a) under a vacuum pressure of 300-1,000 Pa,
c) Homogenization of the paper-carbon film obtained in b) by pressing it between two rollers with a separation of 0.5-3 mm,
d) Cold pressing and compaction of the paper-carbon film, at temperatures between 20 and 30 °C, applying a pressure of 1-4 × 10⁶ Pa, for 1-3 minutes,
e) Curing of the paper-carbon film at room temperature for a minimum period of 12 hours,
f) Generation of the macroporous substrate (MPS) layer by thermal treatment of the cured paper-carbon film, obtained in e), in the following steps:
   - 60-90 °C for 12-48 hours,
   - 180-220 °C for 8-24 hours,
   - 280-350 °C for 1-5 hours, followed by the application by airbrushing, on one side of the carbon-paper, of a solution containing between 0.001 and 0.005 g of silver nanoparticles with a diameter between 5 nm and 5 micron, dispersed in 40-70 ml of isopropyl alcohol and 2-4 ml of water-soluble epoxy, and
   - 900-1,050°C for 5-40 minutes,
g) Obtaining the microporous gas diffusion layer (MPL) by depositing, by airbrushing or electrospray, at 40-70°C, a microlayer of acetylene carbon on one of the faces of the macroporous substrate layer (MPS) obtained in f), forming a thin film of carbon of 1-4 mg/cm², and
h) Application of a 2% perfluoroexane aqueous solution by airbrushing to the gas diffusion layer (GDL) obtained in g), formed by the MPS and the MPL, and subsequent curing process at 100-150 °C for 10-20 minutes.

In particular embodiments, the plant fibers used in step a) for the generation of the paper-carbon pulp may comprise a mixture of esparto fibers and cotton fibers.

In particular, the manufacturing method has a fundamental advantage over the procedures described in the state of the art given that, in the present invention, the process is carried out in an aqueous medium, avoiding the use of organic solvents, also using fibers of esparto as plant fiber in the manufacture of the MPS which, mixed, optionally, with cotton fibers allows controlling the morphology of the MPS, and a subsequent heat treatment at temperatures lower than those currently used, of only 1,000 °C.

In addition, the use of methyl cellulose in the paper pulp manufacturing process is a critical parameter for controlling the filtering process from the adjustment of the solution viscosity in the paper pulp preparation process, which later will confer some special properties to the MPS.

The pressing of the "paper pulp" for the production of the MPS takes place at room temperature, without the need to require high temperatures. This fact facilitates the manufacturing process of the MPS, and lowers its production costs by reducing its energy bill.

The MPS carbonization/graphitization process (step f), takes place at a temperature of 1,000°C and without inert atmosphere, compared to temperatures of 1,300-2,500°C that are used in other production methods and that require an inert atmosphere in the process. This fact represents a very considerable saving, both in the energy bill for the production of the MPS (over 40%), and in the reduction of CO₂ emissions during its manufacturing process.

The hydrophobicity of the MPS and the MPL that form the GDL is adjusted by spraying a 2% perfluoroexane aqueous emulsion.

Thus, with the method of the present invention it is possible to 1) significantly reduce the environmental impact throughout its production process, by avoiding the use of organic solvents, 2) use, for the first time, esparto plant fibers that are produced with low water demand, and 3) the thermal treatment to which the MPS are subjected takes place at a temperature of only 1,000 °C, all on the basis that the final product obtained has features of electrical conductivity and porosity, thanks to its composition, which makes it ideal for use in fuel cells.

### Description of a preferred embodiment of the invention

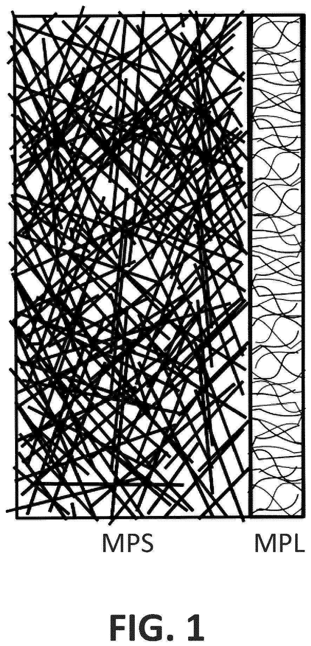

Figure 1 shows the basic structure of the GDLs of the present invention. Said structure consists of a first macroporous layer (MPS), approximately 0.30 mm thick, which must provide excellent electrical conductivity, good mechanical characteristics, and high porosity. Next to said MPS, there is a porous microlayer (MPL) approximately 60 microns thick, composed mainly of a thin carbon layer, whose fundamental function is to distribute the reactant gases in the fuel cell in a homogeneous way, until reaching the catalyst surface on the electrode.

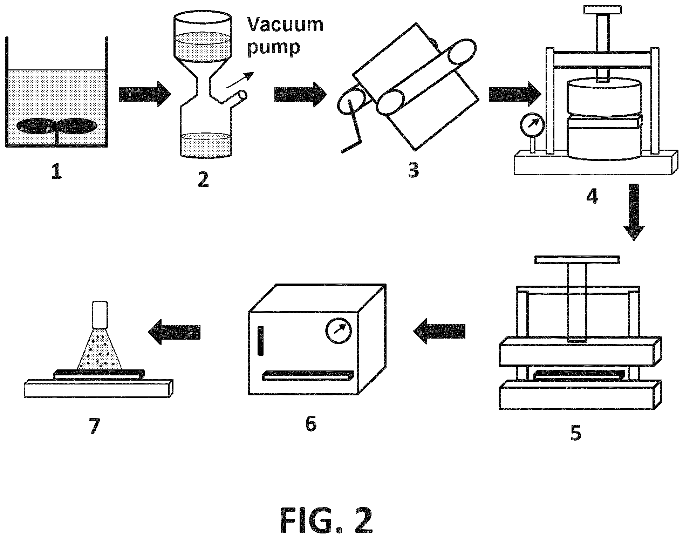

As shown in Figure 2, the GDL manufacturing process consists of 7 clearly differentiated steps. Next, both the components and the manufacturing method followed in each of the steps of the GDL synthesis process are described in detail.

### a) Generation of paper pulp.

The generated paper pulp consists of the following components:
- 0.15 mg of methyl cellulose,
- 15 ml of white glue in water,
- 1.9 g of carbon fiber 1mm long,
- 0.5 - 3 g of plant fiber of different composition (cotton/esparto),
- 8.5 ml of water-soluble epoxy, and
- 1.1 g of graphite with a grain size between 15-20 microns.

All the previously determined components are mixed in a volume of 1.5 I of osmosis water and stirred for 15 minutes to homogenize the mixture.

### b) Filtering

Once a homogeneous mixture has been achieved in the previous section, it is filtered in a 160 mm diameter Buchner funnel, under a negative vacuum pressure of only 500 Pa. The filtered paper film is cut into a square shape with a side of 12 cm.

### c) Homogenization of the paper film

In order to homogenize the thickness of the generated paper film, the paper pulp that has been filtered in section b) is pressed between two rollers with a separation of 1 mm. Said pressing must be carried out in several directions in order to homogenize the thicknesses of the generated MPS and its composition.

### d) Pressing

Once the paper film has been generated, the paper film is cold pressed, applying a homogeneous pressure of 2.55·10⁶ Pa (26 kg/cm²), for 2 minutes.

### e) Curing

The curing of the paper film that gives rise to the MPS takes place in a manual press, at room temperature, for a minimum period of 12 hours.

### f) Heat treatment

In order to improve and optimize both the permeability and the electrical conductivity of the MPS, the carbon paper films are subjected to the following heat treatment:
- 80 °C for 24 hours.
- 200 °C for 12 hours
- 300 °C for 2 hours

Once said thermal treatment is finished, a solution containing 0.0022 g of silver nanoparticles of 5 nm in diameter, dissolved in 60 ml of isopropanol and 2.9 ml of water-soluble epoxy, is applied by airbrushing on one of the faces of the manufactured 12×12 cm carbon paper.
- As a final step, carbon paper is subjected to a temperature of 1000 °C for 15 minutes, to definitively generate the MPS.

### g) MPL deposition

Using airbrushing, we deposited a thin film of acetylene carbon black on one of the faces of the MPS supported on a hot plate at 60 °C, until reaching a concentration of 1.75 mg/cm², from a solution of 0.25 g of carbon black in 50 ml of isopropyl alcohol, and 1 ml of a stock solution of epoxy in water, which has been prepared from 20 ml of an aqueous solution containing 1.75 ml of accelerant + 4 ml of epoxy.

### h) Application of aqueous solution of perfluoroexane and curing

Finally, in order to adjust its hydrophobicity, 10 ml of a 2% perfluoroexane aqueous solution is applied to the 12x12 cm GDL by airbrushing, finally undergoing a curing process at 120 °C for a period of 15 minutes.

In this way, a gas diffusion layer (GDL) is obtained with a high plant fiber content of up to 60% and a high porosity (40-75%), whose pores also have very different sizes, which provides it with a high electrical conductivity (3,500-4,500 S.m⁻¹) and high permeability to gases (5-7 ml/cm².s).

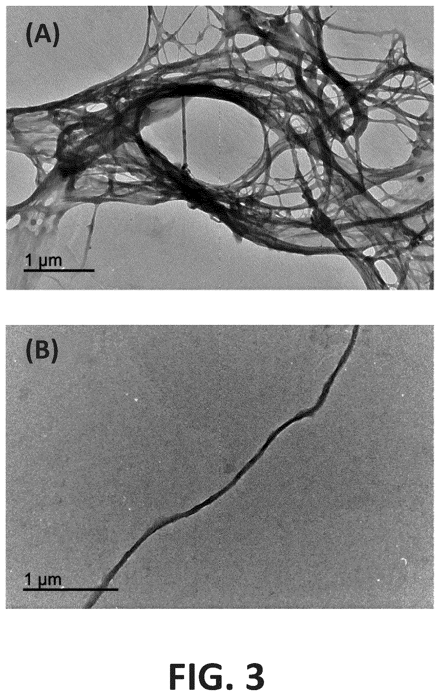

Figure 3 shows a TEM image of cotton (A) and esparto (B) fibers used in the manufacture of the MPS. As can be seen from the nature of said fibers, the new MPS have a particular morphology depending on the composition of said fibers, after the carbonization process to which they are subjected. Thus, properties such as gas permeability, porosity and electrical conductivity (characteristic properties that determine the suitability of GDLs in a fuel cell and that can vary by up to 20% depending on the composition of the plant fiber used), can be adjusted from the variation of the composition in said fibers.

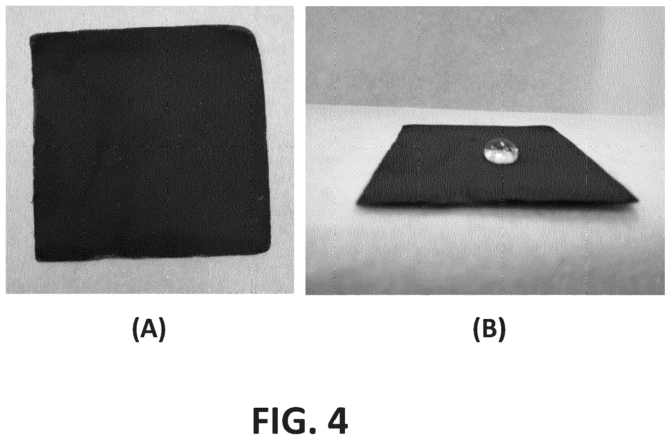

The synthesized GDLs also have a high hydrophobicity, as can be seen in Figure 4 (B), to optimize the drainage of the water generated in the electrochemical process that takes place inside the cell, while allowing the gases to reach the catalyst surface.

## Claims

1. Gas diffusion layer (GDL) for proton exchange membrane (PEM) fuel cells formed by a macroporous substrate layer (MPS) and a microporous carbon layer (MPL), **characterized in that** the macroporous substrate layer (MPS) is formed by a combination of carbon fibers and plant fibers, wherein the plant fibers comprise mostly esparto fibers.

2. Gas diffusion layer, according to claim 1, **characterized in that** the MPS is between 0.15 and 1 mm thick.

3. Gas diffusion layer, according to claim 1 o 2, **characterized in that** the MPL is between 35 and 60 microns thick.

4. Gas diffusion layer (GDL), according to any of the claims 1-3, **characterized in that** the plant fibers of the MPS are present in 10-60% of the total mass of the MPS.

5. Gas diffusion layer (GDL), according to any of the claims 1 to 4, **characterized in that** the plant fibers of the MPS are a combination of esparto fibers and cotton fibers.

6. Method for manufacturing a gas diffusion layer (GDL) for proton exchange membrane (PEM) fuel cells, according to claims 1-5, **characterized in that** it comprises the following manufacturing steps:
a) Generation of a paper-carbon pulp by homogeneously mixing the following components in aqueous solution:
• 0.05-0.25 mg of methyl cellulose,
• 5-20 ml of white glue in water,
• 1.5-2.5 g of carbon fiber 0.5-3 mm long,
• 0.5-4 g of plant fiber, which includes mainly esparto fibers,
• 6-10 ml of water-soluble epoxy, and
• 0.5-1.5 g of graphite with a grain size between 10 and 30 microns,
b) Filtering of the paper-carbon pulp generated in a) under a vacuum pressure of 300-1,000 Pa,
c) Homogenization of the paper-carbon film obtained in b) by pressing it between two rollers with a separation of 0.5-3 mm,
d) Cold pressing and compaction of the paper-carbon film, at temperatures between 20 and 30 °C, applying a pressure of 1-4×10⁶ Pa, for 1-3 minutes,
e) Curing of the paper-carbon film at room temperature for a minimum period of 12 hours,
f) Generation of the macroporous substrate layer (MPS) by thermal treatment of the cured paper-carbon film, obtained in e), in the following steps:
i.60-90°C for 12-48 hours,
ii.180-220°C for 8-24 hours,
iii.280-350 °C for 1-5 hours, followed by the application by airbrushing, on one side of the carbon-paper, a solution containing between 0.001 and 0.005 g of silver nanoparticles, with a diameter between 5 nm and 5 micron, dispersed in 40-70 ml of isopropyl alcohol and 2-4 ml of water-soluble epoxy, and
iv.900-1050°C for 5-40 minutes,
g) Obtaining the microporous gas diffusion layer (MPL) by depositing, by means of airbrushing or electrospray, at 40-70°C, a microlayer of acetylene black carbon on one of the faces of the macroporous substrate layer (MPS) obtained in f), forming a thin carbon film of 1-4 mg/cm², and
h) Application of a 2% perfluoroexane aqueous solution to the gas diffusion layer (GDL) obtained in g), formed by the MPS and the MPL by airbrushing, and subsequent curing process at 100-150 °C for 10-20 minutes.

7. Method according to claim 6, wherein the plant fibers used in step a) for the generation of the paper-carbon pulp comprise a mixture of esparto fibers and cotton fibers.
